# EUROPEAN PATENT SPECIFICATION

(11) **EP 3 816 492 B1**
(45) Date of publication and mention of the grant of the patent: **23.03.2022**
(21) Application number: 20200378.6
(22) Date of filing: 06.10.2020
(51) Int. Cl.: F16K 1/52, F16K 1/54, F16K 3/24, F16K 47/08, F24D 19/10

(54) **MODULATING VALVE WITH REGULATION OF MINIMUM FLOW RATE**
MODULIERENDES VENTIL MIT REGELUNG DER MINDESTDURCHFLUSSRATE
VANNE MODULANTE COMPRENANT UNE RÉGULATION DU DÉBIT MINIMUM

(30) Priority: 28.10.2019 IT 201900019856
(43) Date of publication of application: 05.05.2021
(73) Proprietor: FUGAS S.p.A., 20090 Trezzano sul Naviglio (MI) (IT)
(72) Inventor: FUGAZZA, Giuseppe, 20090 Trezzano sul Naviglio (MI) (IT)
(74) Representative: Ripamonti, Enrico

(56) References cited:
- EP-A1- 0 911 714
- EP-A1- 3 388 721
- EP-A1- 3 527 862
- EP-A1- 3 553 623
- WO-A1-2019/034216
- DE-U1- 20 201 730

## Description

The subject of the present invention is a modulating valve according to the preamble of the independent claim. This preamble can be read in EP3388721.

As is known, modulating valves, for example on-off valves, are used in hydraulics in order to put into communication an outlet duct and at least a first intake duct for a fluid provided in a valve body which is connected to a hydraulic plant. The valve can be two-way, and thus be an on-off valve, or it can be three-way (with two intake ducts), and in this case it is a mixer valve.

With non-limiting reference to a plant for heating a dwelling in which there flows a fluid which is used to heat an environment and to heat domestic hot water, it is known to use a two-way on-off valve in this plant in order, according to the needs, to direct a (primary) fluid heated by a source of heat towards known heating elements placed in the environment, and/or towards a heat exchanger (for example with plates), in order to heat domestic hot water.

In order to carry out its function, a conventional on-off valve comprises a hollow structure with an opening for intake of the heated fluid (for example water) and an outlet opening for this fluid. These openings are placed respectively at the intake duct and the outlet duct of the valve body in which the on-off valve is placed. The valve body can have another outlet opening in order to allow it to be connected to another valve unit.

The valve comprises a throttle which can close the outlet opening or open it in order to allow the fluid or water which is heated (for example to a restricted temperature) to reach the outlet duct of the valve body, and to be used directly or indirectly in order to heat the water of the heating plant of the environment, and/or to reach an exchanger for the production of domestic hot water. In the present text, the heating plant, or the plant for production of domestic hot water, will be indicated as the "primary user".

In an on-off valve of the aforementioned type, there is the problem of obtaining opening of the outlet for the water which is directed towards the heating plant (or the heat exchanger), which opening guarantees a greatly reduced and minimum flow rate, in order to maintain a constant temperature in the environment, without increasing the costs for the heating thereof (or in order to maintain the domestic hot water at a minimum desired temperature). At present, the minimum opening which can be obtained with the known on-off valves always comprises a flow rate of fluid, through the outlet directed to the primary user, which is at least equal to approximately 100 litres per hour (for example 100-150 1/h), which is in fact excessive for example for maintaining the temperature of an environment constant and/or maintaining a temperature of the domestic hot water at a desired minimum value (for example 40°C).

The objective of the present invention is to provide a modulating valve of the aforementioned type which permits a minimum calibrated flow of heated fluid with flow rates which are far lower than the present minimum flow rates of the present modulating valves, such as to obtain constant temperature values of the fluid in the primary user, without excessive fluctuations of the flow rate of fluid over a period of time, and without excessive costs of use of the heating plant in which this valve is used.

Another objective is to provide a modulating valve of the aforementioned type which is simple to operate.

A further objective is to provide a modulating valve of the aforementioned type which has restricted dimensions, such as to be able to be inserted in valve bodies which are already known without these bodies needing to be modified.

Another objective is to provide a modulating valve of the aforementioned type which has limited production costs, and can be produced by means of the conventional techniques used to obtain the known modulating valves.

These objectives and others are achieved by a modulating valve according to the appended claims.

For better understanding of the present invention, purely by way of non-limiting example, the following drawings are appended, in which:
figure 1 is a front view of a modulating valve and in particular of an on-off valve according to the invention;
figure 2 is a view in partial cross-section and in perspective of the valve in figure 1;
figure 3 is a view in cross-section according to the line 3-3 in figure 1;
figure 4 is a view in cross-section similar to that in figure 3, but with the valve inserted inside a valve body which is also in cross-section;
figure 5 is a view in perspective from above of a detail of the valve in figure 1;
figure 6 is an exploded view in perspective of the valve in figure 1;
figure 7 is a view in longitudinal cross-section of a modulating valve, and in particular of a mixer valve obtained according to the invention, said figure not showing an actuator associated with this valve; and
figure 8 is a view in perspective from below of the modulating valve in figure 1.

With reference to said figures, an on-off valve which can be used in a heating circuit of a dwelling is generally indicated as 1. This on-off valve is of the two-way type, and makes it possible to transfer a fluid (generally water), heated for example by a burner (in a manner which in itself is known), to a primary user defined by heating elements distributed in said dwelling and/or by domestic hot water.

The on-off valve can be inserted in a known manner inside a valve body 2 with a duct 3 for intake of the heated fluid, and an outlet duct 4 which can convey this fluid to the primary user; a further outlet duct 5, closed by a stopper 100, can be used to connect the valve body 2 to another valve body.

Similarly, the on-off valve 1 comprises a structure 7 with an end outlet opening 8 and a lateral intake opening 9.

More particularly, said structure 7 comprises a cartridge 11 of the on-off valve 1 with a cylindrical portion 12 (which is in the form of a bowl and is open at both opposite ends 12A, 12B), and an annular end portion 13 which is connected to the cylindrical portion 12 by arms 15. Between the arms there are present opposite windows which define the lateral intake opening 9, whereas the annular portion 13 limits the end outlet opening 8.

The cartridge of the valve 11 cooperates with an end spacer 20 which is connected by means of screwing to the cylindrical portion 12. This spacer 20 supports in a known manner an actuator 21, for example a step-by-step electric motor, which can permit the operation and thus the use of the on-off valve 1. This motor is connected to a conventional electrical control circuit, not represented, which controls the implementation thereof according to the demand coming from outside the heating circuit (for example, the demand for domestic hot water by a user present in the aforementioned dwelling, or the demand for hot water by a thermostat of the heating plant of the dwelling itself).

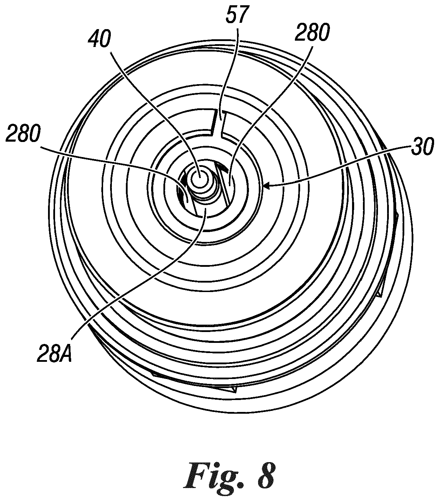

The motor 21 acts on a thrust unit 23 which is moveable axially, i.e. along a longitudinal axis W of the structure 8. In particular, the unit 23 comprises a rod 26 which can cooperate directly with the actuator 21 (which thrusts the rod along the axis W), said rod being coupled to a rod-holder pin 28 which in turn supports by means of one of its portions 28A a throttle 30 which is placed at the end outlet opening 8, and can close or open up the opening. Laterally in the portion 28A, the rod-holder pin has at least one longitudinal hollow 280 (two opposite ones in figure 8, obtained by milling) at the throttle, which hollow, as will be described, in conditions of minimum opening of the valve permits a calibrated minimum passage of water.

The unit 23 (comprising the rod 26 and the rod-holder pin 28) is movable inside a body 33 in the form of a bowl, on which there acts a return spring 34 which is inserted inside the cylindrical portion in the form of a bowl 12, said return spring 34 being supported on an end flange 33A of the body in the form of a bowl 33 and on the end 12A of the cylindrical portion in the form of a bowl 12.

A further spring 36 is placed around the rod-holder pin 28, which spring acts on the throttle 30. This spring can press the throttle 30, which is not secured on said pin 28, but is simply fitted on the portion 28A thereof (with the possibility of axial displacement along it), against a throttle disc 38 of the throttle 30, which is also fitted on said pin 28. A ring nut 39 (for regulation) is secured (screwed) on an end 40 of the pin 28, and blocks the throttle 30 and the disc 38 (thrust by the spring 36 towards the ring nut) on said rod-holder pin 28. The fact that the throttle 30 is not secured on the pin 28 permits the regulation of the position of the rod 26 of the pin 28 inside the spacer 20. By this means, it is possible to regulate the course of the pin 28 thanks to the relative sliding of the throttle 30 on this pin.

Conventional sealing rings are provided between the various elements of the valve: a sealing ring 43 is placed between the disc of the throttle 38 and the pin 28, a sealing ring 44 is present between this disc and the annular portion 13 of the structure 7, sealing rings 45 and 46 are placed between the throttle 30 and this annular portion 13 and between the annular portion and the valve body 2, sealing rings 48 and 49 are placed between the rod 26 and the spacer 20, and a sealing ring 50 is present between the spacer and the valve body 2.

The throttle 30 comprises a body 53 which, according to a first embodiment of the invention, has a conical form and extends along the axis W towards the cylindrical portion 12 of the cartridge 11. This conical body 53 has a (widened) end part or end 55 which has its own conicity, and can cooperate with the annular portion 13, and in particular with the end outlet opening 8 of the on-off valve. The end part or end 55 is in the form of a bowl, and, on one of its lateral surfaces 56, has at least one blind slot 57 which is longitudinal (i.e. substantially parallel to the axis W) and opens into the cavity 59, i.e. at the end of the end part 55 of the actuator.

The body 53 also has arms 60 (which have cylindrical development and are separated by spaces or openings 610) projecting from its end 55, and a central cylindrical part 61 fitted (so as to slide) on the rod-holder pin 28 at each hollow 280 i.e. of the portion 28A. The aforementioned spring 36 acts on this central part 61. Inclined or flared openings 610 are provided between the arms 60.

Thanks to the form of the throttle 30 and in particular of its (at least partly) conical end, the form of the rod-holder pin 28 (and its hollows 280), as well as because of the presence of the inclined openings 600, a minimum axial displacement of the throttle 30 (thrust by the thrust unit 23) gives rise to the possibility of having a reduced flow of fluid, the flow rate of which can be regulated at the outlet of the outlet opening 8.

In fact, in conditions in which the valve is closed, the throttle 30 intercepts and closes the outlet opening 8. Its end 55 is supported with its entire lateral surface on the wall of the opening 8, and each slot 57 is closed by this wall of the opening 8, and does not communicate with the interior of the cartridge 11, which is connected in a non-closed manner to the intake opening 9. The heated (or heatable) fluid is thus present in the cartridge 11. In addition, the water which is present in the hollows 280 (obtained from the interior of the cartridge 11) can not exit from the opening 8 because of the presence of the sealing ring 44, which closes all passages between the throttle 30, the annular end portion 13, and the disc of the throttle 38.

When it is necessary to maintain a minimum flow rate passing through the outlet opening 8, the actuator 21 is activated in a manner which in itself is known, and moves the thrust unit 23 towards the outlet opening 8. This unit thrusts the throttle 30 so as to be positioned such that the sealing ring 44 is detached from the annular portion 13, and the water which is present in the hollows 280 can pass through the space thus created, in a calibrated manner. This water also passes through a minimum opening of each slot 57 which moves away from the opening 8, and is no longer closed by the wall thereof. Continuing with the thrust, the throttle 30 moves even further away with its end part 55 from the opening 8, and each slot 57 is opened up increasingly for the passage of the water obtained from the hollows 280.

Continuing with the thrust, at a certain point the openings 600 open up (which reach the free edge of the opening 8), and the water can pass with a greater flow rate also through these openings. Finally, the openings 610 between the arms 60 become completely open, and the water can flow freely between them with the maximum possible flow rate. Thus, at the start of the displacement of the throttle 30, thanks to the conicity of the end part or end 55 of the body 53 of the throttle 30 itself, since the sealing ring 45 can act on said part 55, the fluid from the interior of the cartridge 11 passes only through the hollows 280, and reaches each slot 57. When, as a result of greater flow rates, this part moves even further to the exterior of the opening 8, the sealing ring 45 no longer seals, and the water passes freely. In order to have a minimum calibrated flow rate, it is therefore important for this ring to work in the initial phase of opening, forcing the water to pass through the hollows 280, which, in combination with the slot 57 and as a result of their form, guarantee said minimum flow rate.

This therefore provides significant minimum calibration of the flow rate of water at the outlet. It should be noted that "minimum flow rate" indicates a flow rate of between 5 and 20 1/h, preferably between 8 and 15 1/h, and advantageously approximately 10 1/h. It will be appreciated that the value of this flow rate also depends on the dimensions of each slot 57, on the number of slots, on the geometry of the hollows 280 of the rod-holder 28, and on the conicity of the end 55 of the throttle.

The actuator 21 guarantees a small displacement (including of hundredths of a millimetre) of the throttle 30 in the opening 8: in the case in which this actuator is a step-by-step motor, this movement can be ensured.

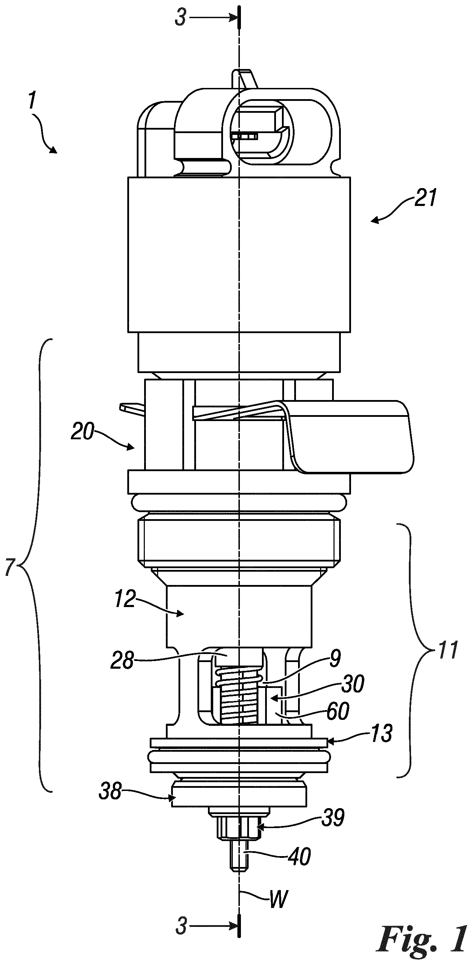

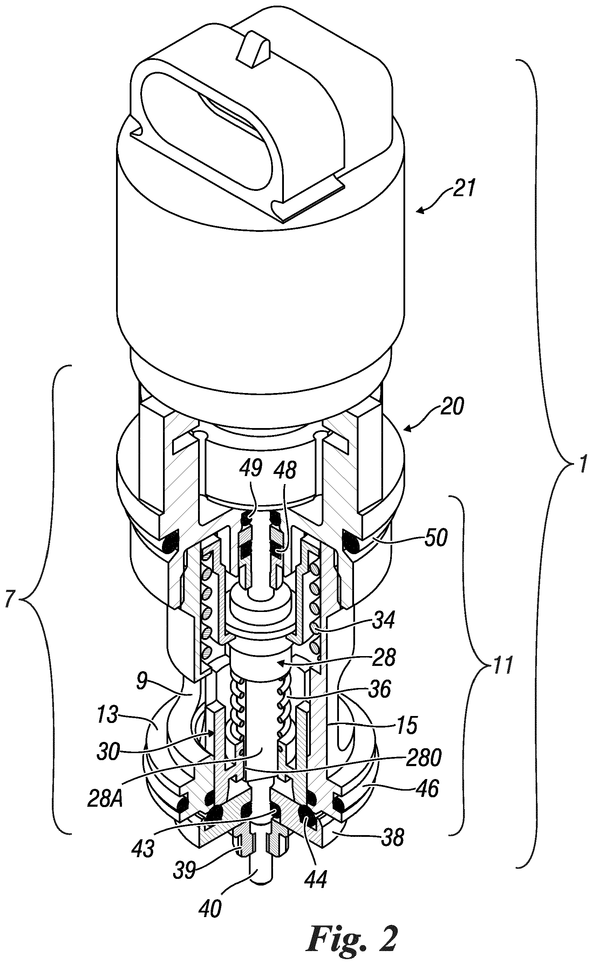

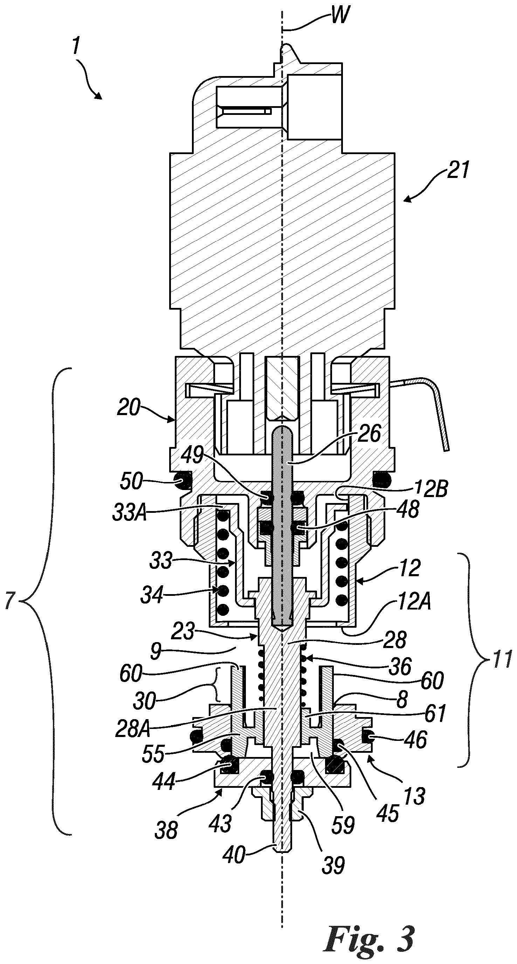

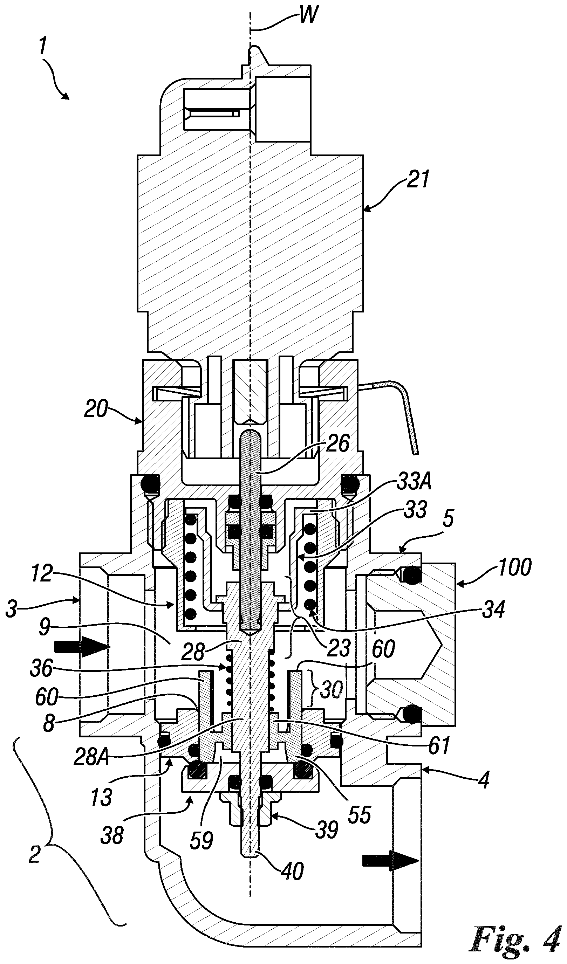

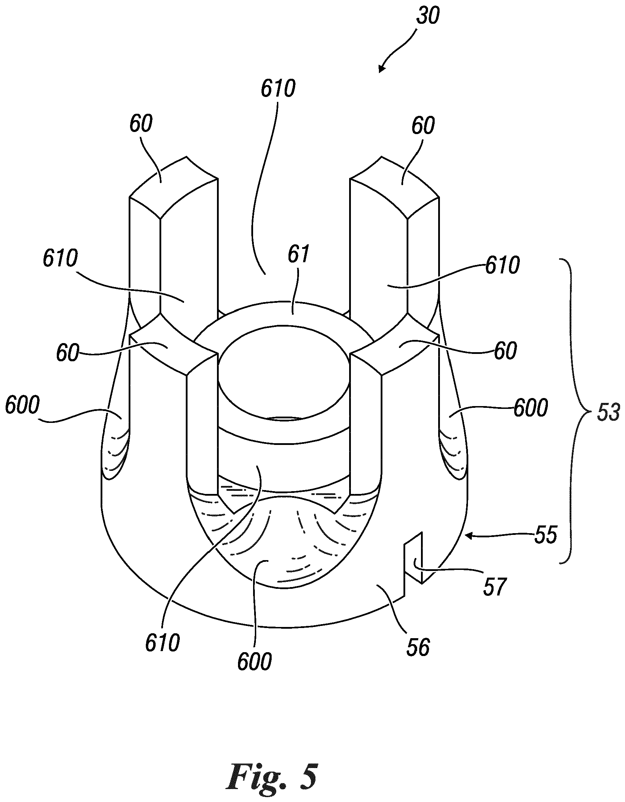

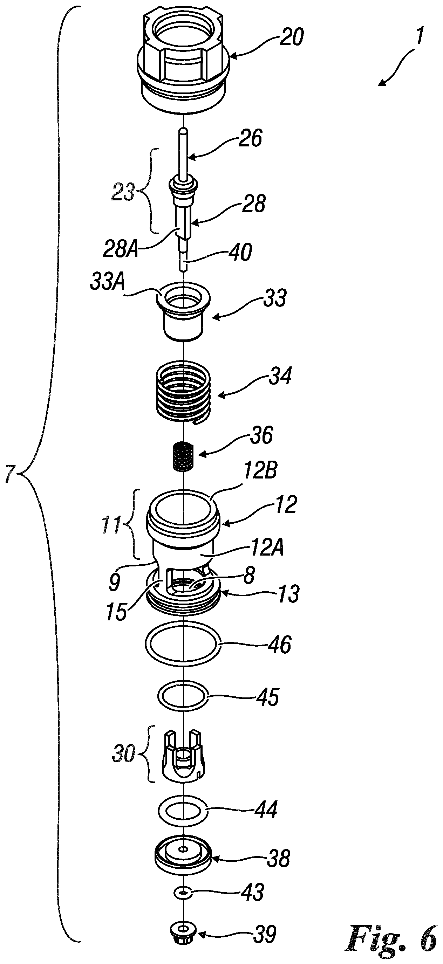

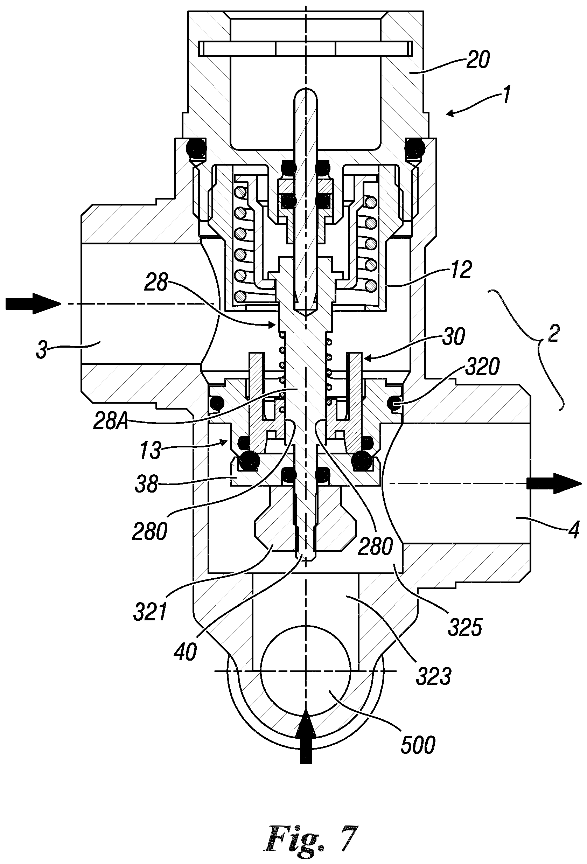

In figure 7, where parts corresponding to those already described in figures 1-6 and 8 are indicated with the same numerical references, a modulating valve of the mixer type is shown.

This valve comprises a valve body 2 with the intake duct 3, an outlet duct 4, and a second intake duct 500. The primary fluid of water (heated by a burner or a similar heating unit) enters the body 2 through the (first) intake duct 3, and, through the second intake duct 500, it penetrates into the body 2 of return water obtained from the plant for heating the environment.

The valve 1, which in this case operates as an on-off valve, is placed in the body 2. This valve comprises all the characteristics of the valve in figures 1-7, and its annular portion 13 is placed at a passage 320 provided in the body 2, between the openings 3 and 4 and 500.

Unlike the valve in the other figures, the valve in figure 7 has a unit 321 in the place of the ring at 39 in the other figures. This unit can be positioned on an opening 323 in order to close the opening, said opening being placed at the intake of a chamber 325 of the valve body 2, to which there are connected the outlet 4 and the second intake 500. When it is positioned on this opening 323, the unit 321 prevents the free flow of the water obtained from the heating plant through the second intake duct 500, said return flow thus being directly circulated towards the burner.

According to a variant, the throttle is cylindrical, but the outlet opening is conical. By this means, a minimum displacement of the throttle therein can make it possible to open up each slot 57 on the exterior of the outlet opening, and guarantee the passage of fluid through the opening, as described above.

The actuator can be any drive means which can guarantee controlled movement of the thrust unit.

Various embodiments of the invention have been described and cited. Still others can be obtained by persons skilled in the art on the basis of the description provided, which embodiments come within the scope of the present invention as defined by the following claims.

## Claims

1. Modulating valve (1) which can be inserted in a valve body (2) placed inside a hydraulic circuit of a plant for heating a dwelling, said modulating valve (1) comprising a structure (7) which is hollow in the interior, and has an intake opening (9) and an outlet opening (8) for a heated fluid, at the outlet opening (8) there being provided a throttle (30) which is functionally associated with a thrust unit (23) and is fitted on a portion (28A) of said thrust unit (23), the thrust unit being actuated along a longitudinal axis (W) of the structure (7) by an actuator unit (21) which is connected to an end of said structure (7), said throttle (30) being movable together with said thrust unit (23) under the action of said actuator unit (21) and being displaced within said outlet opening (8) such as to regulate the flow of fluid through said outlet opening, **characterised in that** at least one longitudinal hollow (280) is present between said portion (28A) of said thrust unit (23) and the throttle (30), said hollow being provided in said portion (28A), and the heated fluid can pass through the hollow, said throttle (30) having an end part (55) which can cooperate with a wall of said outlet opening (8), at least one blind slot (57) being provided in a lateral surface (56) of said end part (55) of the throttle (30), said slot being placed longitudinally in said surface (56), and opening at the end of said throttle (30), one out of said end part (55) of the throttle (30) and said wall of the outlet opening (8) having a conical configuration.

2. Modulating valve according to claim 1, **characterised in that** the throttle (30) has a body (53) with a conical form, the end part (55) thereof being conical and tapering towards the interior of the structure (7) of the modulating valve.

3. Modulating valve according to claim 1, **characterised in that** the throttle (30) is released from the thrust unit (23) and can slide relatively, during the regulation phase, longitudinally on the portion (28A) thereof on which the throttle is fitted.

4. Modulating valve according to claim 2, **characterised in that** said body (53) of the throttle (30) has arms (60) which project from the end part (55) towards the interior (7) of the on-off valve (1), flared openings (600) being provided at said arms on this end part (55), said body (53) having a central part (61) fitted on the portion (28A) of said thrust unit (23), each longitudinal hollow (280) of this unit being provided between said central part and said thrust unit.

5. Modulating valve according to claim 4, **characterised in that** said central part (61) is cylindrical.

6. Modulating valve according to claim 1, **characterised in that** said actuator unit is a step-by-step motor.

7. Modulating valve according to claim 1, **characterised in that** it permits minimum flow rates of fluid passing through the outlet opening (8) of between 5 and 20 1/h, preferably between 8 and 15 1/h, and advantageously approximately 10 1/h.

8. Modulating valve according to claim 1, **characterised in that** it is alternatively a mixer valve or an off valve.

## Patentansprüche

1. Modulierendes Ventil (1), das in einen Ventilkörper (2) eingesetzt sein kann, welcher im Inneren eines Hydraulikkreises einer Anlage zum Beheizen einer Wohneinheit platziert ist, wobei das modulierende Ventil (1) eine Struktur (7) umfasst, die innerlich hohl ist, und eine Einlassöffnung (9) und eine Auslassöffnung (8) für ein erwärmtes Fluid aufweist, wobei an der Auslassöffnung (8) eine Klappe (30) bereitgestellt ist, die funktionsfähig einer Schubeinheit (23) zugeordnet und auf einen Abschnitt (28A) der Schubeinheit (23) aufgesetzt ist, wobei die Schubeinheit durch eine Betätigungseinheit (21), die mit einem Ende der Struktur (7) verbunden ist, entlang einer Längsachse (W) der Struktur (7) betätigt wird, wobei die Klappe (30) unter der Wirkung der Betätigungseinheit (21) zusammen mit der Schubeinheit (23) bewegbar ist und in der Auslassöffnung (8) derart verschoben wird, dass der Fluidstrom durch die Auslassöffnung reguliert wird,
**dadurch gekennzeichnet, dass** zwischen dem Abschnitt (28A) der Schubeinheit (23) und der Klappe (30) mindestens eine längsgerichtete Aussparung (280) vorhanden ist, wobei die Aussparung in dem Abschnitt (28A) bereitgestellt ist und das erwärmte Fluid durch die Aussparung strömen kann, wobei die Klappe (30) einen Endteil (55) aufweist, der mit einer Wandung der Auslassöffnung (8) zusammenwirken kann, wobei in einer seitlichen Oberfläche (56) des Endteils (55) der Klappe (30) mindestens ein Blindschlitz (57) bereitgestellt ist, wobei der Schlitz in Längsrichtung in der Oberfläche (56) platziert ist und sich am Ende der Klappe (30) öffnet, wobei der Endteil (55) der Klappe (30) oder die Wandung der Auslassöffnung (8) eine konische Gestaltung aufweist.

2. Modulierendes Ventil nach Anspruch 1, **dadurch gekennzeichnet, dass** die Klappe (30) einen Körper (53) mit einer konischen Form aufweist, wobei ihr Endteil (55) konisch ist und sich hin zum Inneren der Struktur (7) des modulierenden Ventils verjüngt.

3. Modulierendes Ventil nach Anspruch 1, **dadurch gekennzeichnet, dass** die Klappe (30) von der Schubeinheit (23) freigegeben wird und während der Regelungsphase auf deren Abschnitt (28A), auf den die Klappe aufgesetzt ist, relativ in Längsrichtung gleiten kann.

4. Modulierendes Ventil nach Anspruch 2, **dadurch gekennzeichnet, dass** der Körper (53) der Klappe (30) Arme (60) aufweist, die aus dem Endteil (55) hin zum Inneren (7) des Auf/Zu-Ventils (1) hervorstehen, wobei an den Armen dieses Endteils (55) aufgeweitete Öffnungen (600) bereitgestellt sind, wobei der Körper (53) einen mittleren Teil (61) aufweist, der auf den Abschnitt (28A) der Schubeinheit (23) aufgesetzt ist, wobei jede längsgerichtete Aussparung (280) dieser Einheit zwischen dem mittleren Teil und der Schubeinheit bereitgestellt ist.

5. Modulierendes Ventil nach Anspruch 4, **dadurch gekennzeichnet, dass** der mittlere Teil (61) zylinderförmig ist.

6. Modulierendes Ventil nach Anspruch 1, **dadurch gekennzeichnet, dass** die Betätigungseinheit ein Schrittmotor ist.

7. Modulierendes Ventil nach Anspruch 1, **dadurch gekennzeichnet, dass** es minimale Durchflussmengen des durch die Auslassöffnung (8) strömenden Fluids zwischen 5 und 20 l/h ermöglicht, vorzugsweise zwischen 8 und 15 l/h und vorteilhafterweise ungefähr 10 l/h.

8. Modulierendes Ventil nach Anspruch 1, **dadurch gekennzeichnet, dass** es alternativ ein Mischventil oder ein Sperrventil ist.

## Revendications

1. Vanne modulante (1) insérable dans un corps de vanne (2) disposé à l'intérieur d'un circuit hydraulique d'une centrale de chauffage d'un logement, ladite vanne modulante (1) comprenant une structure (7) creuse à l'intérieur, ainsi qu'un orifice d'aspiration (9) et un orifice de refoulement (8) de fluide chauffé, au niveau de l'orifice de refoulement (8) est prévu une soupape (30) associé de manière fonctionnelle à une unité de poussée (23) et monté sur une partie (28A) de ladite unité de poussée (23), l'unité de poussée étant actionnée le long d'un axe longitudinal (W) de la structure (7) par une unité d'actionnement (21) reliée à une extrémité de ladite structure (7), ladite soupape (30) étant mobile avec ladite unité de poussée (23) sous l'action de ladite unité d'actionnement (21) et étant déplacé à l'intérieur dudit orifice de refoulement (8) de manière à réguler l'écoulement de fluide à travers ledit orifice de refoulement, **caractérisé en ce qu'**au moins un creux longitudinal (280) est présent entre ladite partie (28A) de ladite unité de poussée (23) et la soupape (30), ledit creux étant prévu dans ladite partie (28A), et le fluide chauffé peut passer à travers le creux, ladite soupape (30) ayant une partie d'extrémité (55) pouvant coopérer avec une paroi dudit orifice de refoulement (8), au moins un trou borgne (57) étant prévu sur une surface latérale (56) de ladite partie d'extrémité (55) de la soupape (30), ledit trou étant placé longitudinalement dans ladite surface (56), et s'ouvrant à l'extrémité de ladite soupape (30), l'une de ladite partie d'extrémité (55) de la soupape (30) et de ladite paroi de l'orifice de refoulement (8) ayant une configuration conique.

2. Vanne modulante selon la revendication 1, **caractérisée en ce que** la soupape (30) a un corps (53) de forme conique, dont la partie d'extrémité (55) est conique et s'effile vers l'intérieur de la structure (7) de la vanne modulante.

3. Vanne modulante selon la revendication 1, **caractérisée en ce que** la soupape (30) est libéré de l'unité de poussée (23) et peut coulisser relativement, pendant la phase de régulation, longitudinalement sur la partie (28A) de celle-ci sur laquelle est monté la soupape.

4. Vanne modulante selon la revendication 2, **caractérisée en ce que** ledit corps (53) de la soupape (30) comporte des bras (60) qui font saillie de la partie d'extrémité (55) vers l'intérieur (7) de la vanne marche-arrêt (1), des ouvertures évasées (600) étant prévues au niveau desdits bras sur cette partie d'extrémité (55), ledit corps (53) comportant une partie centrale (61) montée sur la partie (28A) de ladite unité de poussée (23), chaque creux longitudinal (280) de cette unité étant prévu entre ladite partie centrale et ladite unité de poussée.

5. Vanne modulante selon la revendication 4, **caractérisée en ce que** ladite partie centrale (61) est cylindrique.

6. Vanne modulante selon la revendication 1, **caractérisée en ce que** ladite unité d'actionnement est un moteur pas à pas.

7. Vanne modulante selon la revendication 1, **caractérisée en ce qu'**elle autorise des débits minimaux de fluide passant par l'orifice de refoulement (8) compris entre 5 et 20 1/h, de préférence entre 8 et 15 1/h, et avantageusement d'environ 10 1/h.

8. Vanne modulante selon la revendication 1, **caractérisée en ce qu'**elle est alternativement une vanne mélangeuse ou une vanne d'arrêt.
